# EUROPEAN PATENT APPLICATION

(11) **EP 1 672 876 A2**
(43) Date of publication of application: **21.06.2006**
(21) Application number: 05026825.9
(22) Date of filing: 08.12.2005
(51) Int. Cl.: H04L 29/12

(54) **Network system and method for assigning dynamic address and performing routing based upon dynamic address**

(30) Priority: 20.12.2004 KR 2004108966
(71) Applicant: Samsung Electronics Co., Ltd., Suwon-si, Gyeonggi-Do (KR)
(72) Inventor: Paik, Sung-Chan, Yeongtong-gu, Suwon-si, Gyeonggi-do (KR); Kang, Byung-Chang, Poongde.-dong 1168 Yongin-si Gyeonggi-do (KR); Park, Yong-Seok, Yongin-si, Gyeonggi-do (KR)
(74) Representative: Lang, Johannes

(57) **Abstract**

In a network system using dynamic addresses, an address management server assigns dynamic addresses to hosts attempting to use the dynamic addresses in response to dynamic address requests from the hosts, and a router manages packet exchange between hosts connected to the network system based upon authenticated dynamic address information. In a method for assigning dynamic addresses in a network, dynamic addresses are assigned to hosts attempting to use the dynamic addresses in response to a request therefrom, the dynamic address information of assigned dynamic addresses is delivered to the host, and the dynamic address assignment information is registered in a dynamic address management table. In this way, invasion of the network by malicious hosts is prevented.

## Description

### BACKGROUND OF THE INVENTION

### Technical Field

The present invention relates to a network system using dynamic addresses and, more particularly, to a network system and a method for assigning dynamic addresses and performing routing based upon the dynamic addresses.

### Related Art

In general, network units (e.g., a server, a host and a router) connected to a network system are necessarily assigned addresses. For the purpose of efficiently manage the network system, technical solutions are adopted to dynamically assign addresses to the network units. For example, it is very inefficient in view of address operation in the network system, that a specific unit, such as a host unit having a fusible link, occupies a fixed address in the network system. Therefore, the unit of a fusible link is assigned a dynamic address when it is connected to a network so that the unit can use the dynamic address only while being connected to the network.

The network system using dynamic address assignment needs a separate unit, e.g., a server adapted to assign dynamic addresses to hosts and to manage the dynamic addresses (hereinafter, the server will be referred to as an "address management server"). In response to a request, the address management server assigns a dynamic address to a host.

In response to a data transmission request from a host, a router registers the dynamic address of the host in a forwarding table, and transmits data based upon the address in the forwarding table.

In this way, the router manages the forwarding table based upon dynamic table information from the host. The router cannot confirm whether or not the dynamic address of the data transmission-requesting host is assigned by the address management server. Therefore, if a malicious host generates data transmission requests while intentionally changing dynamic addresses, the router suffers from excessive load while registering dynamic addresses. The load applied to the router also causes a load to be applied to the entire network system as well.

### SUMMARY OF THE INVENTION

The present invention has been developed to solve the foregoing problems of the prior art, and it is therefore an object of the present invention to provide an apparatus and a method for improving the processing ability of a network system.

It is another object of the invention to provide an apparatus and a method which prevent the performance of the network system from being degraded by a number of dynamic addresses which are forged maliciously.

It is still another object of the invention to provide an apparatus and a method for performing packet transmission based upon authenticated dynamic addresses, thereby ensuring stable operation of the network system.

According to an aspect of the invention for realizing the above objects, there is provided a network system comprising: an address management server for assigning a dynamic address to a host attempting to use the dynamic address in response to a dynamic address request from the host; and a router for managing packet exchange between hosts connected to the network system based upon authenticated dynamic address information.

Preferably, the address management server comprises: a dynamic address manager for storing/managing dynamic address information available in the network system; a first interface for interfacing with hosts connected to the network system; a second interface for interfacing with the router; a control unit for selecting a dynamic address to be assigned to a host in response to a dynamic address request from the host, and for delivering the selected dynamic address to the first interface and to the second interface.

Preferably, the dynamic address manager is adapted to store/manage the assignment status and lifetime of individual dynamic addresses.

Preferably, the control unit is adapted to deliver the dynamic address in real time to the router via the second interface when assigning the dynamic address to the host.

Preferably, the router is adapted to receive dynamic address assignment information of respective hosts from the address management server, to generate a dynamic address management table based upon the dynamic address assignment information, and to perform dynamic address authentication for packet exchange between hosts connected to the network system based upon the dynamic address management table.

Preferably, the router comprises: a third interface for interfacing with the address management server; a fourth interface for interfacing with hosts connected to the network system; a dynamic address management table for storing the dynamic address assignment information provided by the address management server; a dynamic address management table manager for managing the dynamic address management table based upon the dynamic address assignment information delivered by the address management server via the third interface; a forwarding table for storing forwarding information based upon the dynamic addresses; and a control unit for receiving a packet delivery request via the fourth interface, for determining whether a packet to be delivered has a source address stored in the dynamic address management table, and only if the source address is stored in the dynamic address management table, registering the delivery information of the packet in the forwarding table, and for performing packet exchange based upon the forwarding table.

In addition, the dynamic address management table comprises a host identification field and a dynamic address field assigned to a corresponding host.

According to another aspect of the invention for realizing the above objects, there is provided a method for assigning dynamic addresses in a network system using the dynamic addresses, the method comprising the steps of: assigning a dynamic address to a host attempting to use the dynamic address in response to a request therefrom; delivering the dynamic address information of the assigned dynamic address to the host; and registering the dynamic address assignment information in a dynamic address management table. Preferably, the registering step comprises registering the identification information of the host and the dynamic address assigned to the host.

In addition, the dynamic address management table is stored in a router of the network system.

According to another aspect of the invention for realizing the above objects, there is provided a method for performing routing in a network system using dynamic addresses, the method comprising the steps of: (a) generating and storing authentication information available for the authentication of dynamic addresses assigned to respective hosts; (b) in response to a packet exchange request between hosts connected to the network system and using dynamic addresses, authenticating a dynamic address of a host that requests packet exchange; and (c) only if the dynamic address of the host is valid as a result of the authentication, performing routing for packet exchange.

Preferably, step (a) comprises receiving dynamic address assignment information from a server adapted to assign dynamic addresses in the network system, and generating the authentication information based upon the dynamic address assignment information.

Preferably, step (a) comprises receiving the identification information of a host which is assigned a dynamic address by the server, and receiving the dynamic address assigned to the host.

It is also preferable that step (b) comprise determining that the dynamic address is valid only if the identification information of a host that requests packet exchange and the dynamic address of the host are included in the authentication information.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a diagram of a network system adapted to assign dynamic addresses and to perform routing based upon the dynamic addresses;
FIG. 2 is a diagram illustrating invasion by a host using a forged address in the network system shown in FIG. 1;
FIG. 3 is an example of a forwarding table generated by a network adapted to assign dynamic addresses and to perform routing based upon the dynamic addresses;
FIG. 4 is a diagram of a network system adapted to assign dynamic addresses, and to perform routing based upon the dynamic addresses, according to an embodiment of the invention;
FIG. 5 is a schematic block diagram of an apparatus for assigning dynamic addresses according to an embodiment of the invention;
FIG. 6 is a schematic block diagram of an apparatus for performing routing based upon assigned dynamic addresses according to an embodiment of the invention;
FIG. 7 illustrates an example of an IPv4 address assignment information management table according to an embodiment of the invention;
FIG. 8 is a flowchart of a process of assigning dynamic addresses and performing routing based upon the dynamic addresses in a network system according to an embodiment of the invention;
FIG. 9 illustrates an example of a message structure available for requesting a dynamic IPv4 address in the process shown in FIG. 8;
FIG. 10 illustrates an example of a message structure available for responding to a dynamic IPv4 address request in the process shown in FIG. 8;
[FIG. 11 illustrates an example of a message structure available for delivering a dynamic IPv4 address assignment result in the process shown in FIG. 8;
FIG. 12 illustrates an example of a packet structure generated based upon a dynamic IPv4 address assigned by the process shown in FIG. 8; and
FIG. 13 is a diagram illustrating invasion blocking against a host using a forged address in the network system shown in FIG. 4.

### DETAILED DESCRIPTION OF THE INVENTION

The following detailed description will present preferred embodiments of the invention in conjunction with the accompanying drawings. For reference, the same or similar reference signs designate corresponding parts throughout several views. In the following detailed description, well-known functions or components will not be described in detail if they would unnecessarily obscure the understanding/concept of the invention.

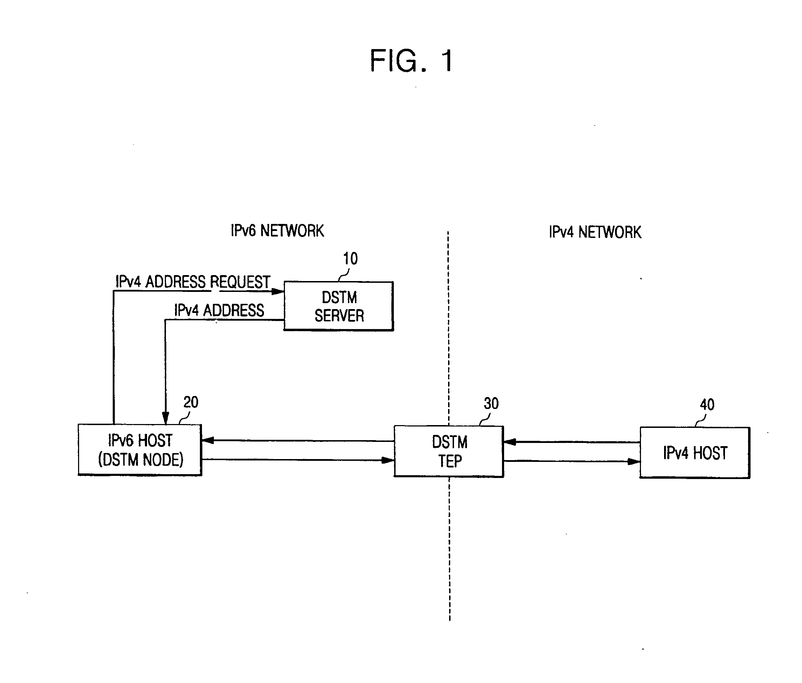

FIG. 1 is a diagram of a network system adapted to assign dynamic addresses and perform routing based upon the dynamic addresses of the prior art. In particular, FIG. 1 shows a network system in which a host operating on Internet Protocol version 6 (IPv6) uses a dual stack to transmit/receive data to/from a host operating on Internet Protocol version 4 (IPv4), adapted to assign a dynamic IPv4 address to an IPv6 host, and performs routing based upon the dynamic IPv4 address.

The dual stack refers to a stack structure that has both an IPv4 stack and an IPv6 stack in an IPv6 host. This structure is one of the approaches used to support the interlock and compatibility between a new IPv6 network and an existing IPv4 network though a course in which IPv4 networks evolve into IPv6 networks. The IPv6 host having the dual stack can communicate with an existing IPv4 node using the IPv4 stack while communicating with an IPv6 node using the IPv6 stack. For this purpose, the IPv6 host necessarily has IPv6 and IPv4 addresses. In practice, the IPv6 host dynamically manages IPv4 addresses in order to avoid resultant IPv4 address exhaustion.

Such an IPv6 transition mechanism for dynamically managing IPv4 addresses uses a dual stack to support the interlock and compatibility between the IPv6 network, and the IPv6 network is referred to as a Dual Stack Transition Mechanism (DSTM).

A network system adapted to dynamically assign IPv4 addresses in the DSTM will now be described with reference to FIG. 1.

The network system includes a DSTM server 10 for storing/managing dynamic IPv4 addresses, an IPv6 host 20 located at a boundary between IPv6 and IPv4 networks, and a DSTM Tunnel End Point (TEP) 30 for performing data transmission between the IPv6 host 20 and the IPv4 host 40.

In response to a request from the IPv6 host 20 as a DSTM node, the DSTM server 10 assigns a dynamic address IPv4 to the IPv6 host 20.

When the IPv6 host 20 having the dynamic IPv4 address assigned to it by the DSTM server 10 sends a data transmission request, the DSTM TEM 30 updates a forwarding table and sends a corresponding packet to the IPv4 host 40. That is, the DSTM TEM 30 receives an IPv4 packet encapsulated in an IPv6 packet from the IPv6 host 20, and determines whether or not the source address and destination address of the IPv4 packet are registered in the previously stored table. If the source and destination addresses of the IPv4 packet are not registered in the forwarding table, the DSTM TEP 30 adds the source and destination addresses to the forwarding table, and then performs data transmission. In this way, the packet is decapsulated and then transmitted to the IPv4 network through IPv4 routing.

In this event, the DSTM TEP 30 manages the forwarding table based upon dynamic IPv4 address information from the IPv6 host 20. The DSTM TEP 30 cannot confirm whether or not the dynamic IPv4 address of the IPv6 host 20 is assigned by the DSTM server 10.

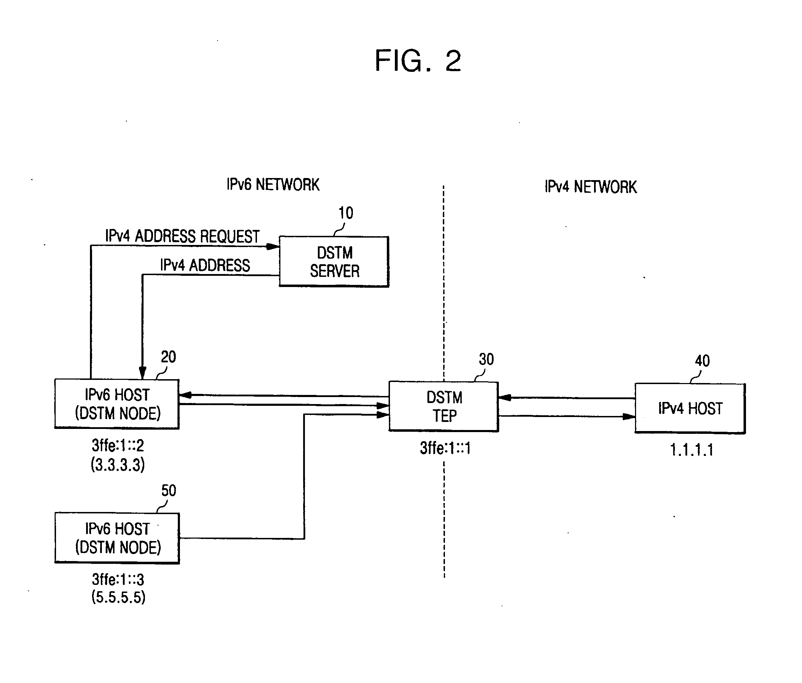

FIG. 2 is a diagram illustrating invasion by a host using a forged address in the network system shown in FIG. 1. Referring to FIG. 2, a host using a forged IPv4 address, which is not assigned by the DSTM server 10, sends a data transmission request to the DSTM TEP 30 in the network system shown in FIG. 1. The IPv6 host 20 has an IPv6 address '3ff3:1::2' as well as an IPv4 address '3.3.3.3' assigned by the DSTM server 10. In addition, the DSTM TEP 30 has an IP address '3ffe:1::1', and the IPv4 host 40 has an IP address '1.1.1.1'.

Referring to FIG. 2, the IPv6 host 20 sends a data transmission request to the DSTM TEP 30 using the dynamic IPv4 assigned by the DSTM server 10, whereas another IPv6 host 50 sends a data transmission request to the DSTM TEP 30 using the forged IPv4 address that is not assigned by the DSTM server 10. For example, the IPv6 host 50 may forge an IPv4 address '5.5.5.5' and then send the data transmission request to the DSTM TEMP 30 based upon the forged IPv4 address'5.5.5.5'.

Then, the DSTM TEP 30 processes the forged IPv4 address of the IPv6 host 50 as a normal IPv4 address without noticing the forged IPv4 address of the IPv6 host.

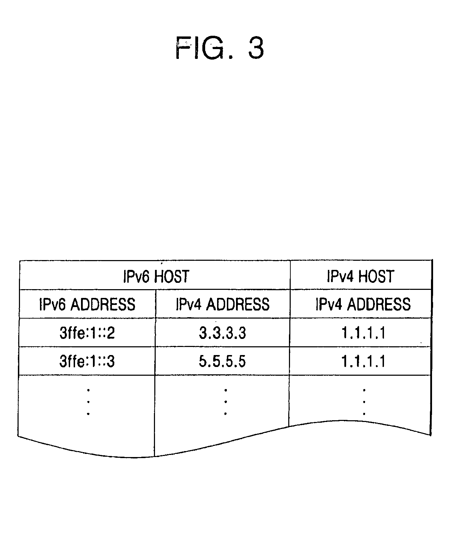

FIG. 3 is an example of a forwarding table generated by a network adapted to assign dynamic addresses and to perform routing based upon the dynamic addresses. More specifically, FIG. 3 is an example of a forwarding table generated by the DSTM TEP 30 processing the forged IPv4 address and the normal IPv4 address in the same way. Referring to FIG. 2 and FIG. 3, registered in the DSTM TEP 30 are the forwarding information of a packet with the IPv6 host 20 as a source and the IPv4 host as a destination, and the forwarding information of a packet with the IPv6 host 50 as a source and the IPv4 host 40 as a destination. That is, registered in the forwarding table are a first entry including the IPv6 address '3ffe:1::2' and the IPv4 address '3.3.3.3' of the IPv6 host 20 and the IPv4 address '1.1.1.1' of the IPv4 host 40 (i.e., destination address), and a second entry including the IPv6 address '3ffe:1::3' and the IPv4 address '5.5.5.5' of the IPv6 host 50 and the IPv4 address '1.1.1.1' of the IPv4 host 40 (i.e., destination address).

The DSTM TEP 30 registers the IPv4 address without being able to determine whether or not the IPv4 address is a normally generated dynamic IPv4 address. Therefore, the DSTM TEP 30 processes the forged IPv4 address information from the IPv6 host 50 in the same fashion as the normal IPv4 address information without distinguishing the forged IPv4 address information from a normal one.

If the IPv6 host 50 maliciously continues to change its IPv4 address or IPv6 address and to transmit packets, the DSTM TEP 30 has to register changed address information in the forwarding table. As a result, this may impose an excessive load on the DSTM TEP 30, and have an effect on the network system as well. Thus, the network system is under Denial of Service (DoS) invasion, which causes excessive loads thereon.

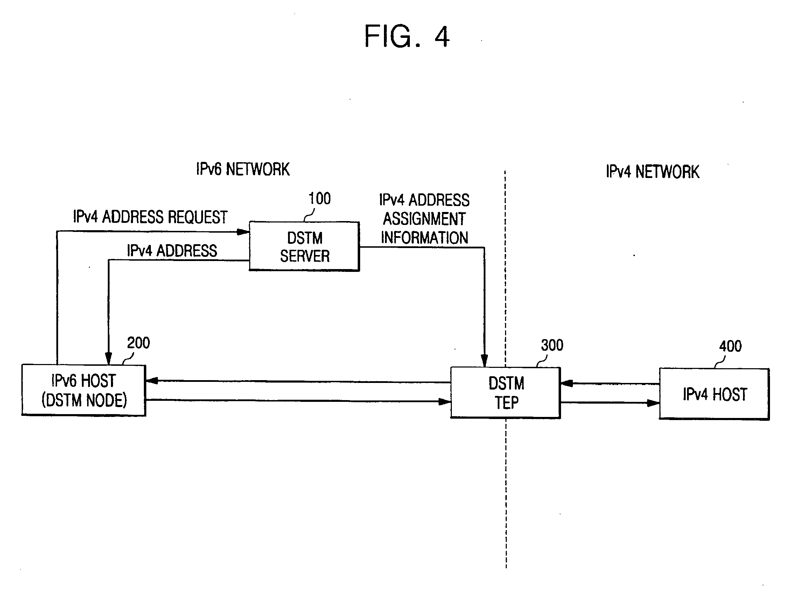

FIG. 4 is a diagram of a network system adapted to assign dynamic addresses and to perform routing based upon the dynamic addresses, according to an embodiment of the invention. In particular, the invention is applied to a network system, in which a host operating on Internet Protocol version 6 (IPv6) uses a dual stack to transmit/receive data to/from a host operating on Internet Protocol version 4 (IPv4), adapted to assign a dynamic IPv4 address to the IPv6 host, and performs routing based upon the dynamic IPv4 address. That is, FIG. 4 illustrates that the invention as applied to a DSTM-based network system.

Referring to FIG. 4, the network system for assigning dynamic addresses and performing routing based upon the dynamic addresses according to the embodiment of the invention includes a DSTM server 100 and a DSTM TEP 300.

The DSTM server 100 is adapted to assign dynamic IPv4 addresses to IPv6 hosts having a dual stack structure (so-called DSTM nodes) in an IPv6 network using DSTM, and to manage the dynamic IPv4 addresses. For this purpose, the DSTM server 100 stores IPv4 addresses usable in its IPv6 network. For example, the DSTM server 100 stores whole IPv4 addresses usable in its IPv6 network and previously-assigned IPv4 address information of some IPv4 addresses that are previously assigned to IPv6 hosts. Upon receiving an IPv4 address request of an IPv6 host 200 having a dual stack structure, the DSTM server 100 selects one address dynamically assignable to the IPv6 host 200 from the previously stored IPv4 addresses, and delivers the selected IPv4 address to the IPv6 host 200.

In addition, the DSTM server 100 delivers the 'IPv4 address assignment information' to the DSTM TEP 300. For example, the IPv6 address of the IPv6 host 200 and the IPv4 address assigned to the IPv6 host 200 are delivered to the DSTM TEP 300. In this event, the DSTM server 100 preferably delivers the 'IPv4 address assignment information' in real time. That is, the DSTM server 100 delivers the 'IPv4 address assignment information' in real time to the DSTM TEP 300 whenever it assigns an IPv4 address to the IPv6 host 200.

The DSTM server 100 stores the address of the DSTM TEP 300, and preferably delivers it to the IPv6 host 200 when delivering the IPv4 address to the IPv6 host 200 in response to the IPv4 address request therefrom. This effectively enables the address of the DSTM TEP 300 to be easily managed. For example, when the IPv6 address of the DSTM TEP 300 is changed due to, for example, the replacement of the DSTM TEP 300, or the DSTM TEP 300 has a variable address, it is not necessary to transmit the changed address of the DSTM TEP 300 in real time to whole IPv6 hosts. Therefore, the load on the network can be lowered.

The DSTM TEP 300 manages the IPv4 address assignment information' from the DSTM server 100 in a separate management table, and in response to a packet delivery request, transmits a packet only if an address contained in the packet is registered in the management table. That is, the DSTM TEP 300 ignores a packet delivery request based upon an address that is not registered in the management table. For example, the DSTM TEP 300 receives the IPv6 and IPv4 addresses of the IPv6 host 200 from the DSTM server 100, which assigned the IPv4 address to the IPv6 host 200, and the DSTM TEP 300 registers the IPv6 and IPv4 address in the management table for IPv4 address assignment information. Upon receiving an IPv6 packet from the IPv6 host 200 for an IPv4 host 400, the DSTM TEP 300 detects the IPv6 and IPv4 addresses of the IPv6 host 200 from a header of the packet, and determines whether the IPv6 and IPv4 addresses are stored in the IPv4 address assignment information management table. If the IPv6 and IPv4 addresses are registered in the IPv4 address assignment information management table, the DSTM TEP 300 delivers the packet to the IPv4 host 400. Otherwise, the DSTM TEP 300 ignores the packet.

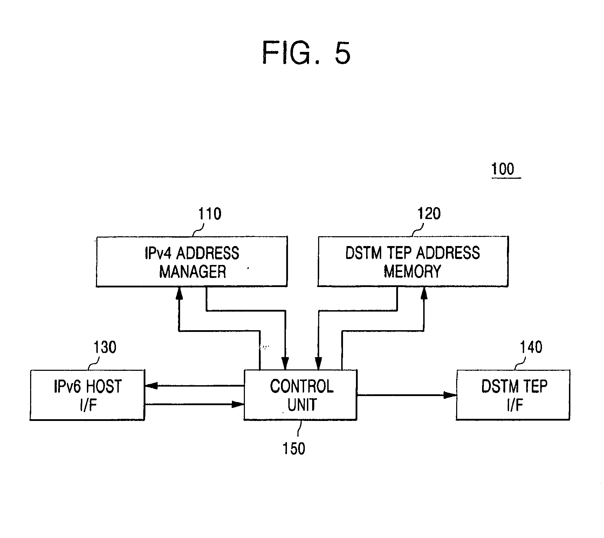

FIG. 5 is a schematic block diagram of an apparatus for assigning dynamic addresses according to an embodiment of the invention. In particular, FIG. 5 illustrates an application of the DSTM server 100 adapted to assign dynamic IPv4 addresses to IPv6 hosts in the network system as shown in FIG. 4. That is, FIG. 5 illustrates the DSTM server 100 assigning dynamic addresses to hosts connected to a DSTM-based network system to which the invention is applied.

Referring to FIGS. 4 and 5, the DSTM server 100 includes an IPv4 address manager 110, a DSTM TEP address memory 120, an IPv6 host Interface (I/F) 130, a DSTM TEP I/F 140, and a control unit 150.

The IPv4 address manager 110 manages IPv4 addresses usable in the IPv6 network based upon DSTM. For example, the IPv4 address manager 110 stores remaining IPv4 addresses assignable to any IPv6 hosts having a dual stack structure in the IPv6 network, and IPv4 addresses previously assigned to some IPv6 hosts and their lifetimes. In addition, the IPv4 address manager 110 updates IPv4 address information according to a result of IPv4 address assignment.

The DSTM TEP address memory 120 stores the address of the DSTM TEP 300. For example, when the IPv6 address of the DSTM TEP 300 is changed due to the fact that (for example) the DSTM TEP 300 is replaced or the DSTM TEP 300 has a variable address, the DSTM TEP address memory 120 stores the changed or varied IPv6 address of the DSTM TEP 300.

The IPv6 host I/F 130 interfaces with IPv6 hosts. For example, the IPv6 host I/F 130 receives an IPv4 address request message from the IPv6 host 200, and in response to the request message, delivers an IPv4 address assigned to the IPv6 host to a corresponding IPv6 host.

The DSTM TEP I/F 140 interfaces with the DSTM TEP 300. For example, upon receiving a request from the IPv6 host 200, if an IPv4 address is assigned to the IPv6 host, the DSTM TEP I/F 140 delivers the address assignment information of the IPv6 host 200 to the DSTM TEP 300.

The control unit 150 controls the IPv4 address manager 110, the DSTM TEP address memory 120, the IPv6 host I/F 130 and the DSTM TEP I/F 140 so that an IPv4 address is assigned to an IPv6 host in response to an IPv4 address request from the IPv6 host, and its assignment result is delivered in real time to the IPv6 host and the DSTM TEP 300. For example, upon receiving an IPv4 address request message from the IPv6 host 200 via the IPv6 host I/F 130, the control unit 150 detects a usable IPv4 address from the IPv4 address manager 110 and assigns the IPv4 address as a dynamic IPv4 address of the IPv6 host 200. That is, the detected IPv4 address is delivered to the IPv6 host 200 via the IPv6 host I/F 130. The control unit 150 also controls the DSTM TEP I/F 140 so that it delivers the detected IPv4 address and the IPv6 address of the IPv6 host 200 in real time to the DSTM TEP 300. Preferably, the IPv6 and IPv4 addresses of the IPv6 host 200 are delivered in real time to the DSTM TEP 300 whenever the IPv6 host 200 is assigned an IPv4 address.

If the IPv6 host 200 requests the address of the DSTM TEP 300 together with the dynamic IPv4 address, the control unit 150 detects the address of the DSTM TEP 300 from the DSTM TEP address memory 120, and controls the IPv6 host I/F 130 so that it delivers the address of the DSTM TEP 300, together with the IPv4 address of the IPv6 host 200, to the IPv6 host 200.

Upon being assigned the IPv4 address by the DSTM server 100, the IPv6 host 200 generates an IPv4 packet based upon the IPv4 address, and encapsulates the IPv4 packet in an IPv6 packet based upon its IPv6 address. Then, the IPv6 host 200 delivers the encapsulated IPv4 packet to the DSTM TEP 300. That is, the IPv6 host 200 tunnels the encapsulated packet in the form of IPv4-in-IPv6, to the DSTM TEP 300.

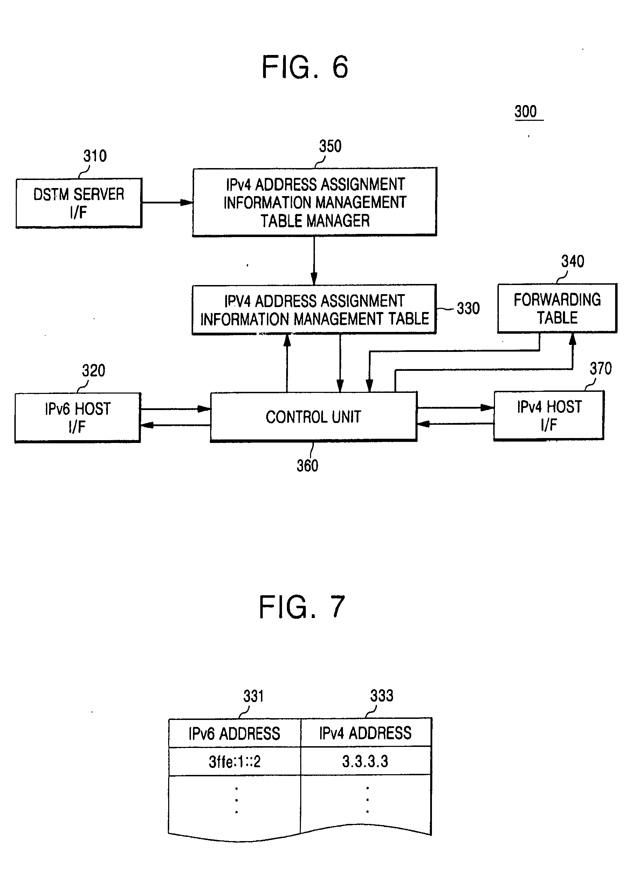

FIG. 6 is a schematic block diagram of an apparatus for performing routing based upon assigned dynamic addresses according to an embodiment of the invention. In particular, FIG. 6 shows an example of use of the DSTM TEP 300 of the DSTM network system, shown in FIG. 4, as a routing means for delivering packets between IPv6 and IPv4 networks in the DSTM network system to which the invention is applied.

Referring to FIGS. 4 and 6, the DSTM TEP 300 includes a DSTM server I/F 310, an IPv6 host I/F 320, an IPv4 address assignment information management table 330, a forwarding table 340, an IPv4 address assignment information management table manager 350, a control unit 360, and an IPv4 host I/F 370.

The DSTM server I/F 310 interfaces with the DSTM server 100. For example, upon receiving an IPv4 address assignment result relating to the IPv6 host 200 from the DSTM server 100, the DSTM server I/F 310 delivers the result to the IPv4 address assignment information management table manager 350.

The IPv6 host I/F 320 interfaces with an IPv6 host. For example, the IPv6 host I/F 320 receives a packet (e.g., an IPv4-in-IPv6 packet) intended for the IPv4 host 400 from the IPv6 host 200 and delivers the packet to the control unit 350. In addition, upon receiving a packet intended for the IPv6 host 200 from the IPv4 host 400, the IPv6 host I/F 320 delivers the packet to the IPv6 network.

The IPv4 address assignment information management table 330 stores IPv4 addresses assigned to IPv6 hosts having a dual stack structure by the DSTM server 100 and IPv6 addresses of the IPv6 hosts. That is, the IPv4 address assignment information management table 330 stores an authenticated IPv4 address for an authenticated IPv6 host.

FIG. 7 illustrates an example of an IPv4 address assignment information management table according to an embodiment of the invention. Referring to FIG. 7, the IPv4 address assignment information management table 330 has an IPv6 address field 331 and an IPv4 address field 333. The IPv4 address field 333 stores IPv4 addresses assigned to IPv6 hosts by the DSTM server 100, and the IPv6 address field 331 stores IPv6 addresses of the IPv6 hosts. FIG. 7 illustrates an example wherein an IPv6 host having an IPv6 address '3ffe:1::2' is assigned an IPv4 address '3.3.3.3'.

The IPv4 address assignment information management table manager 350 of FIG. 6 manages the IPv4 address assignment information management table 330 based upon IPv4 address assignment information received via the DSTM server I/F 310. For example, upon receiving the IPv6 and IPv4 addresses of the IPv6 host 200 via the DSTM server I/F 310, the IPv4 address assignment information management table manager 350 registers the IPv6 and IPv4 addresses in the IPv4 address assignment information management table 330.

The forwarding table 340 stores forwarding information available for packet transmission between an IPv6 network and an IPv4 network. For example, the forwarding table 340 stores the IPv6 and IPv4 addresses of an IPv6 host having a dual stack structure, and the IPv4 address information of an IPv4 host which is to perform packet exchange with the IPv6 host.

The control unit 360 controls the packet transmission between an IPv6 host having a dual stack structure and an IPv4 host. That is, the control unit 360 receives an IPv6-encapsulated packet *(e.g.,* an IPv4-in-IPv6 packet) from the IPv6 host I/F 320, decapsulates the IPv6-encapsulated packet into an IPv4 packet, and transmits the IPv4 packet via the IPv4 host I/F 370 to the IPv4 network. In addition, upon receiving an IPv4 packet from the IPv4 host I/F 370, the control unit 360 encapsulates the IPv4 packet into an IPv6 packet so as to transmit the IPv6 packet via the IPv6 host I/F 320 to the IPv6 network. In particular, the control unit 360 determines whether the IPv6 address and the IPv4 address contained in the packet from the IPv6 host I/F 320 are stored in the IPv4 address assignment information management table 330, and delivers the packet to the IPv4 host I/F 360 only if the IPv6 and IPv4 addresses are stored in the IPv4 address assignment information management table 330. Otherwise, the control unit 360 ignores the packet. For example, upon receiving a packet intended for the IPv4 host 400 from the IPv6 host 200, the control unit 360 determines whether the IPv6 and IPv4 addresses of the IPv6 host 200 are stored in the IPv4 address assignment information management table 330. If the IPv6 and IPv4 addresses of the IPv6 host 200 are stored in the IPv4 address assignment information management table 330, the control unit 360 updates the forwarding table 340 based upon the IPv6 and IPv4 addresses, and delivers the packet to the IPv4 host I/F 370 based upon the forwarding table 340.

The IPv4 host I/F 370 interfaces with an IPv4 host. For example, the IPv4 host I/F 370 receives a packet intended for the IPv6 host 200 from the IPv4 host 400, and delivers the packet to the control unit 360. Upon receiving a packet (e.g., an IPv4-in-IPv6 packet) intended for the IPv4 host 400 from the IPv6 host 200, the IPv4 host I/F 370 delivers the packet to the IPv4 network.

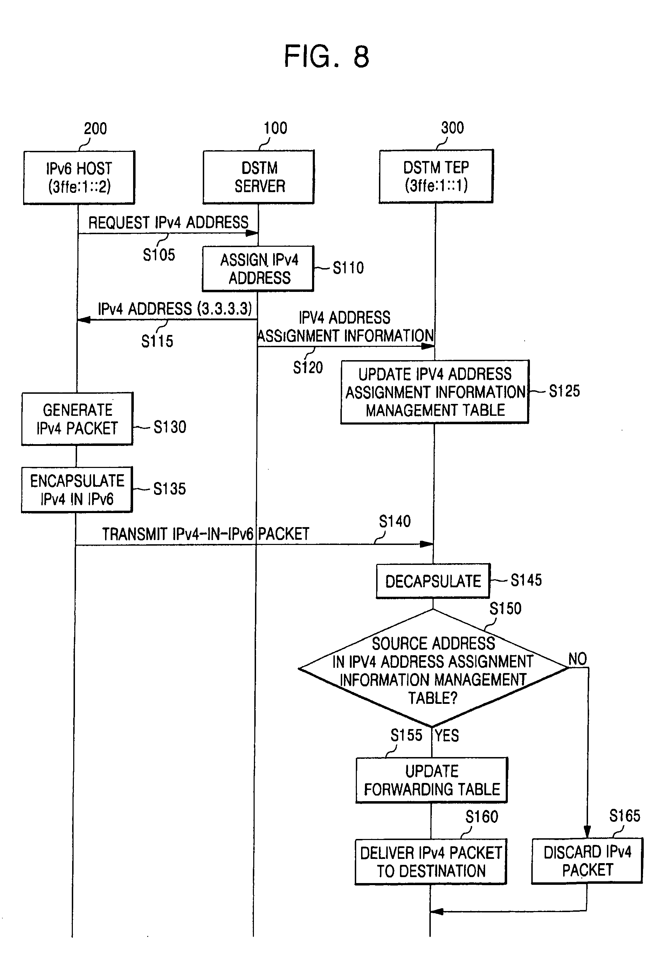

FIG. 8 is a flowchart of a process of assigning dynamic addresses and performing routing based upon the dynamic addresses in a network system according to an embodiment of the invention. In particular, the invention is applied to a network system in which an IPv6 host uses a dual stack to transmit/receive data to/from an IPv4 host, adapted to assign a dynamic IPv4 address to the IPv6 host, and to perform routing based upon the dynamic IPv4 address. That is, the invention is applied to a DSTM network system.

Referring to FIG. 8, the network system includes a DSTM server 100, an IPv6 host 200 having an IPv6 address '3ffe:1::2', and a DSTM TEP 300 having an IPv6 address '3ffe:1::1'. Hereinafter the process of assigning dynamic addresses and performing routing based upon the dynamic addresses in the network system will be described.

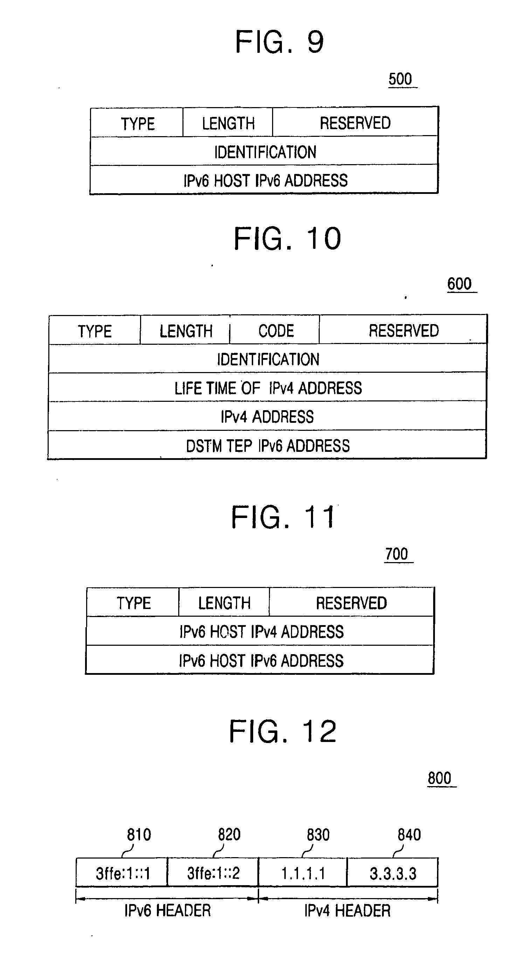

First, the IPv6 host 200 requests a dynamic IPv4 address from the DSTM server 100 in step S 105. In this event, the IPv6 host 200 requests the dynamic IPv4 address based upon a message structure as shown in FIG. 9, which will be described in detail later in the specification.

Then, the DSTM server 100 selects an IPv4 address (*e*.*g*., '3.3.3.3') assignable to the IPv6 host 200 from previously stored IPv4 addresses, and assigns the selected IPv4 address to the IPv6 host 200, in step S110. In step S115, the DSTM server 100 delivers the IPv6 address (e.g., '3.3.3.3') to the IPv6 host 200. In this event, the DSTM server 100 delivers the IPv4 address to the IPv6 host 200 based upon a response message structure as shown in FIG. 10, which will be described in detail later in the specification.

In addition, the DSTM server 100 delivers the IPv4 address assignment information to the DSTM TEP 300 in step S120. In this event, the DSTM server 100 delivers the IPv4 address assignment information to the DSTM TEP 300 based upon an IPv4 address assignment information messages as shown in FIG. 11, which will be described in detail later in the specification.

The order of the above steps S 115 and S120 may be changed. That is, the invention is characterized in that the DSTM server 100 delivers the assigned IPv4 address in real time to both the IPv6 host 200 and the DSTM 300, but is not limited by the order of transmitting the assigned IPv4 address to the IPv6 host 200 and the DSTM TEP 300.

Upon receiving the IPv4 address information assigned to the IPv6 host 200 in step S120, the DSTM TEP 300 updates an IPv4 address assignment information management table based upon the IPv4 address assignment information in step S125. If the IPv6 and IPv4 addresses of the IPv6 host 200 are not stored in the IPv4 address assignment information management table, the DSTM TEP 300 additionally registers the IPv6 and IPv4 addresses of the IPv6 host 200 in the IPv4 address assignment information management table.

In the meantime, upon receiving the IPv4 address (3.3.3.3) in step S115, the IPv6 host 200 generates an IPv4 packet based upon the IPv4 address (3.3.3.3) in step S130. For example, when delivering the IPv4 packet to an IPv4 host having an IPv4 address '1.1.1.1', the IPv6 host 200 stores '1.1.1.1' in a destination address region of an IPv4 header and '3.3.3.3'in a source address region of the IPv4 header.

In step S 135, the IPv6 host 200 encapsulates the IPv4 packet in IPv6. That is, the IPv6 host 200 adds an IPv6 header to the IPv4 packet, such that the address '3eff:1::1' of the DSTM TEP 300 is stored in a destination address region of the IPv6 header, and its address '3eff:1::2' is stored in a source address region of the IPv6 header.

An example of a packet generated through steps S130 and S135 is illustrated in FIG. 12, which illustrates an example of an IPv4 address assignment information management table according to an embodiment of the invention.

Referring to FIG. 12, in an IPv4 packet 800 which is encapsulated in IPv6 in step S135, there are an address '3eff:1::1' of the DSTM TEP 300 stored in a destination address region 810 of the IPv6 header, an address '3eff:1::2' of the IPv6 host 200 stored in a source address region 820 of the IPv6 header, an address '1.1.1.1' of the IPv4 host stored in a destination address region 830 of the IPv4 header, and a dynamic IPv4 address '3.3.3.3' of the IPv6 host stored in a source address region 840 of the IPv4 header.

Referring to FIGS. 8 and 12, upon receiving the packet 800, the DSTM TEP 300 decapsulates the packet in step S145. That is, the IPv6 headers 810 and 820 are removed from the packet 800.

In step S150, the DSTM TEP 300 determines whether the source address of the packet 800 is stored in the IPv4 address assignment information management table. That is, it determines whether a pair of the addresses stored in the source address region 820 of the IPv6 header and the address stored in the source address region 840 of the IPv4 header are stored in the IPv4 address assignment information management table.

If the source address of the packet 800 is stored in the IPv4 address assignment information management table, as determined in step 5150, the DSTM TEP 300 updates a forwarding table of the packet 800 in step S155, and delivers the IPv4 packet to the destination based upon the forwarding table in step S160. If the source address of the packet 800 is not stored in the IPv4 address assignment information management table, as determined in step S150, the DSTM TEP 300 discards or ignores the IPv4 packet in step S160.

In this way, the network system of the invention is adapted to register/manage the dynamic address assignment information delivered from the authenticated-address management server in the separate management table, and to ignore a packet delivery request based upon an address which is not registered in the management table, thereby preventing excessive system load due to the invasion of malicious hosts.

FIG. 9 illustrates an example of a message structure available for requesting a dynamic IPv4 address in the process shown in FIG. 8. Referring to FIG. 9, an IPv4 address request message 500 has type, length, reserved, identification and IPv6 address fields.

The type field has an 8 bit size, and stores type information of a DSTM message.

The length field is composed of 8 bit integers of absolute values, and is adapted to indicate the length of a DSTM address assignment request message.

The reserved field has a 16 bit size, and comprises an area reserved for the system.

The identification field is composed of 32 bit integers of absolute values, and is adapted to match a DSTM address assignment request message to a DSTM address assignment message.

The IPv6 address field has a 128 bit size, and stores the IPv6 address of an IPv6 host (so-called DSTM node) which transmitted a DSTM address assignment request message.

FIG. 10 illustrates an example of a message structure available for responding to a dynamic IPv4 address request in the process shown in FIG. 8. Referring to FIG. 10, a response message 600 for replying to a dynamic IPv4 address request comprises type, length, code, reserved, identification, lifetime, IPv4 address and DSTM TEP address fields.

The type field has an 8 bit size, and stores the type information of a DSTM message.

The length field is composed of 8 bit integers having absolute values, and is adapted to indicate the length of a DSTM address assignment request message.

The code field is composed of 8 bit integers having absolute values, and stores a processing result of a DSTM address assignment request message. For example, '0' stored in the code field may indicate that an address assignment request is successfully processed, and '1' stored in the code field may indicate that the address assignment request is not accepted.

The reserved field has an 8 bit size, and is an area reserved for the system.

The identification field is composed of 32 bit integers having absolute values, and is adapted to match a DSTM address assignment request message to a DSTM address assignment message.

The lifetime field is composed of 32 bit integers having absolute values, and is adapted to store the lifetime of an assigned IPv4 address.

The IPv4 address field has a 32 bit size, and stores a global IPv4 address assigned to an IPv6 host which requested an IPv4 address.

The DSTM TEP address field has a 128 bit size, and stores the IPv6 address of a DSTM TEP which is used by an IPv6 host to tunnel an IPv4 packet. If a DSTM server doubles as a DSTM TEP, the DSTM TEP address field stores the IPv6 address of the DSTM server.

FIG. 11 illustrates an example of a message structure available for delivering a dynamic IPv4 address assignment result in the process shown in FIG. 8. Referring to FIG. 11, an IPv4 address assignment information message 700 comprises a type field, a length field, a reserved field, an IPv4 address field for an IPv6 host, and an IPv6 address field for an IPv6 host.

The type field has an 8 bit size, and stores the type information of a DSTM message.

The length field is composed of 8 bit integers having absolute values, and is adapted to indicate the length of a DSTM address assignment request message.

The reserved field has a 16 bit size, and is an area reserved for the system.

The IPv6 host's IPv4 address field is composed of 32 bit integers having absolute values, and is adapted to store an Ipv4 address assigned to an IPv6 host (so-called DSTM node) that requests an IPv4 address.

The IPv6 host's IPv6 address field is composed of 128 bit integers having absolute values, and is adapted to store the IPv6 address of an IPv6 host (so-called DSTM node) that requested an IPv4 address.

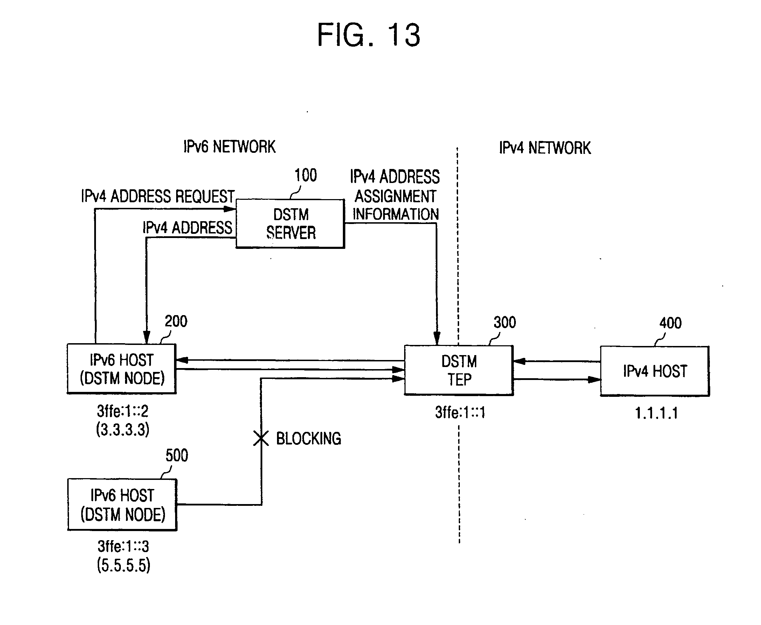

FIG. 13 is a diagram illustrating invasion blocking against a host using a forged address in the network system shown in FIG. 4. Referring to FIG. 13, the DSTM TEP 300 decapsulates a packet from an IPv4 host 200 assigned an IPv4 address by the DSTM server 100 based upon the previously-stored IPv4 address assignment information management table, and delivers the decapsulated packet to an IPv4 host 400. On the other hand, the DSTM TEP 300 ignores a packet from an IPv6 host 500 approaching the DSTM TEP 300 with a self-forged IPv4 address (for example '5.5.5.5'). As a result, this can block a malicious IPv6 host (e.g., IPv6 host 500) from invading the network.

It should be noted that the detailed description has been discussed for a network in which an IPv6 host uses a dual stack to transmit/receive data to/from an IPv4 host, but the invention is not limited to such a network. That is, the invention relates to an apparatus and a method for assigning a dynamic address and performing routing based upon the dynamic address in a network system based upon dynamic addresses. Accordingly, the scope of the invention is in no way limited by such particularly illustrated and described embodiments, but shall be defined by the appended claims and equivalents thereof.

As described above, the network system of the invention is adapted to receive dynamic address information from an address management server in which a router manages dynamic addresses according to hosts, and is adapted to manage a forwarding table based upon the dynamic address information, thereby preventing the invasion of malicious hosts. That is, any dynamic address, which is not included in the dynamic address information, is excluded from the forwarding table. In this way, the invention can prevent the system from being overloaded by being compelled to process a number of dynamic addresses which are generated maliciously.

As a result, the invention can improve the performance of a network system using dynamic addresses. In particular, the invention can relieve a DSTM TEP in an IPv6 DSTM of excessive load, thereby preventing any performance degradation of a DSTM network system.

While the present invention has been shown and described in connection with preferred embodiments, it will be apparent to those skilled in the art that modifications and variations can be made without departing from the spirit and scope of the invention.

## Claims

1. A network system, comprising:
an address management server for assigning a dynamic address to a host attempting to use the dynamic address in response to a dynamic address request from the host; and
a router for managing packet exchange between hosts connected to the network system based upon authenticated dynamic address information.

2. The network system according to claim 1, wherein the address management server comprises:
a dynamic address manager for storing and managing dynamic address information available in the network system;
a first interface for interfacing with hosts connected to the network system;
a second interface for interfacing with the router; and
a control unit for selecting the dynamic address to be assigned to the host in response to the dynamic address request from the host, and for delivering the selected dynamic address to the first interface and to the second interface.

3. The network system according to claim 2, wherein the control unit delivers the dynamic address in real time to the router via the second interface when the dynamic address is assigned to the host.

4. The network system according to claim 1, wherein the router receives dynamic address assignment information for respective hosts from the address management server, generates a dynamic address management table based upon the dynamic address assignment information, and performs dynamic address authentication for packet exchange between hosts connected to the network system based upon the dynamic address management table.

5. The network system according to claim 4, wherein the router comprises:
a third interface for interfacing with the address management server;
a fourth interface for interfacing with hosts connected to the network system;
a dynamic address management table for storing the dynamic address assignment information received from the address management server;
a dynamic address management table manager for managing the dynamic address management table based upon the dynamic address assignment information received from the address management server;
a forwarding table for storing forwarding information based upon dynamic addresses; and
a control unit for receiving a packet delivery request via the fourth interface, for determining whether a packet to be delivered has a source address stored in the dynamic address management table, and for registering the delivery information of the packet in the forwarding table and performing packet exchange based upon the forwarding table when the packet to be delivered has the source address stored in the dynamic address management table.

6. A network system in which IPv6 hosts use a dual stack to transmit data to and receive data from IPv4 hosts, said system comprising:
an address management server for assigning dynamic IPv4 addresses to the IPv6 hosts in response to requests therefrom; and
a router for managing packet exchange between the IPv6 hosts and the IPv4 hosts.

7. The network system according to claim 6, wherein the address management server comprises:
an IPv4 address manager for storing and managing dynamic IPv4 address information available in the network system;
an IPv6 interface for interfacing with the IPv6 hosts in the network system;
a router interface for interfacing with the router; and
a control unit for selecting a dynamic IPv4 address to be assigned to a respective IPv6 host in response to a dynamic IPv4 address request from the respective IPv6 host, and for delivering the selected dynamic IPv4 address to the IPv6 interface and to the router interface.

8. The network system according to claim 7, wherein the IPv4 address manager stores and manages an assignment status and a lifetime of individual IPv4 addresses.

9. The network system according to claim 7, wherein the control unit delivers the dynamic IPv4 address in real time to the router via the router interface when the dynamic IPv4 address is assigned to the respective IPv6 host.

10. The network system according to claim 6, wherein the router receives dynamic IPv4 address assignment information for respective IPv6 hosts from the address management server, generates a dynamic IPv4 address management table based upon the dynamic IPv4 address assignment information, and performs dynamic IPv4 address authentication for packet exchange between the IPv6 hosts and the IPv4 hosts based upon the dynamic address management table.

11. The network system according to claim 10, wherein the router comprises:
a server interface for interfacing with the address management server;
an IPv6 interface for interfacing with the IPv6 hosts;
an IPv4 interface for interfacing with the IPv4 hosts;
an IPv4 dynamic address assignment information management table for storing the dynamic IPv4 address assignment information for the IPv6 hosts as received from the address management server;
a dynamic address management table manager for managing the dynamic IPv4 address management table based upon the dynamic IPv4 address assignment information received from the address management server;
a forwarding table for storing forwarding information based upon the dynamic IPv4 addresses; and
a control unit for receiving a packet delivery request via the IPv6 interface, for determining whether a packet to be delivered has a source address stored in the dynamic IPv4 address management table, and for registering the delivery information of the packet in the forwarding table and delivering the packet to the IPv4 interface based upon the forwarding table when the packet to be delivered has the source address stored in the dynamic IPv4 address management table.

12. A method of assigning dynamic addresses in a network system using the dynamic addresses, the method comprising the steps of:
assigning a dynamic address to a host attempting to use the dynamic address in response to a request therefrom;
delivering dynamic address assignment information for the assigned dynamic address to the host; and
registering the dynamic address assignment information in a dynamic address management table.

13. The method according to claim 12, wherein the registering step comprises registering identification information of the host and the dynamic address assigned to the host.

14. A method for performing routing in a network system using dynamic addresses, the method comprising the steps of:
(a) generating and storing authentication information for the authentication of dynamic addresses assigned to respective hosts;
(b) in response to a packet exchange request between hosts connected to the network system and using dynamic addresses, authenticating a dynamic address of a host that requests packet exchange; and
(c) performing routing for the packet exchange when the dynamic address of the host is validated as a result of the authenticating step.

15. The method according to claim 14, wherein step (a) comprises receiving dynamic address assignment information from a server which assigns dynamic addresses in the network system, and generating the authentication information based upon the dynamic address assignment information.

16. The method according to claim 15, wherein step (a) comprises receiving identification information for a host which is assigned a dynamic address by the server, and receiving the dynamic address which is assigned to the host.

17. The method according to claim 14, wherein step (b) comprises determining the dynamic address to be valid when identification information of a host that requests the packet exchange and the dynamic address of the host that requests the packet exchange are included in the authentication information.

18. A method of assigning dynamic IPv4 addresses in a network system in which IPv6 hosts use a dual stack to transmit data to and receive data from IPv4 hosts, the method comprising the steps of:
(a) assigning a dynamic IPv4 address to an IPv6 host in response to a request therefrom;
(b) delivering dynamic IPv4 address assignment information for the dynamic IPv4 address to the IPv6 host; and
(c) registering the dynamic IPv4 address assignment information in a dynamic IPv4 address assignment information management table.

19. The method according to claim 18, wherein step (c) comprises registering an IPv6 address of the IPv6 host and the dynamic IPv4 address assigned to the IPv6 host.

20. The method according to claim 18, wherein the dynamic address management table is stored in a router of the network system.

21. A method of assigning dynamic IPv4 addresses in a network system in which IPv6 hosts use a dual stack to transmit data to and receive data from IPv4 hosts, the method comprising the steps of:
(a) generating and storing authentication information for authenticating dynamic addresses assigned to respective IPv6 hosts;
(b) in response to a request from an IPv6 host to deliver a packet to an IPv4 host, authenticating a dynamic IPv4 address of the IPv6 host based upon the authentication information; and
(c) performing routing for a packet exchange when the dynamic IPv4 address of the IPv6 host is valid as a result of the authenticating step.

22. The method according to claim 21, wherein step (a) comprises receiving dynamic IPv4 address assignment information from a server which assigns dynamic IPv4 addresses in the network system, and generating the authentication information based upon the dynamic IPv4 address assignment information.

23. The method according to claim 21, wherein step (a) comprises receiving a dynamic IPv6 address of the IPv6 host to which a dynamic address is assigned, and receiving the dynamic IPv4 address of the IPv6 host.

24. The method according to claim 23, wherein step (a) comprises determining the dynamic address to be valid when the dynamic IPv6 address and the dynamic IPv4 address of the IPv6 host are included in the authentication information.
